# EUROPEAN PATENT APPLICATION

(11) **EP 1 389 777 A2**
(43) Date of publication of application: **18.02.2004**
(21) Application number: 03017878.4
(22) Date of filing: 05.08.2003
(51) Int. Cl.: G11B 19/12, G11B 20/00, H04L 23/00

(54) **Optical Disk Apparatus and Optical Disk Processing Method and Optical Disk**

(30) Priority: 14.08.2002 JP 2002236618
(71) Applicant: Kabushiki Kaisha Toshiba, Tokyo (JP)
(72) Inventor: Tsumagari, Yasufumi, Toshiba Corporation, 1-chome, Minato-ku, Tokyo 105-8001 (JP); Mimura, Hideki, Toshiba Corporation, 1-chome, Minato-ku, Tokyo 105-8001 (JP)
(74) Representative: Henkel, Feiler, Hänzel

(57) **Abstract**

An optical disk apparatus has a control portion for, based on address information and authentication information read out from an optical disk, providing access to a specific server via a communication line, thereby acquiring extensible information, and a reproducing portion for reproducing and outputting the acquired extensible information. In this optical disk apparatus, if an optical disk is not provided, authentication processing cannot be carried out, and extensible information cannot be acquired. Thus, extensible information can be reproduced with security.

## Description

The present invention relates to an optical disk apparatus. More particularly, the present invention relates to an optical disk apparatus and an optical disk apparatus communication method connected to a web content distribution server.

Recently, as specifications for reproducing, video image and/or voice information recorded from a DVD forum to an information recording medium, "DVD Specifications for Read-Only Disc Part 3 : VIDEO SPECIFICATIONS" were issued in August, 1996. The specifications are composed of: presentation data having actual video image and/or voice data recorded therein; and navigation data for managing the presentation data. For the presentation data, video data, audio data, and sub-picture data are multiplexed in accordance with a specification for a program stream (2048 bytes) defined in MPEG2. In addition, a PGC (ProGram Chain) and a cell for setting a time configuration or sequence of video image and/or voice data to be reproduced are described for the navigation data, and functions for multi-angle, multi-story, and parental functions are provided.

As the prior art concerning the above description, in Jpn. Pat. Appln. Kokai Publication No. 11-161663, there is disclosed an image display device for providing a service in which a DVD video title and an HTML file are fused with each other. In this image display device, a URL is taken out from a navi-pack of a video object unit, and connection to the Internet is made based on the taken out URL, making it possible to display an image together with a scene in reproduction.

In this patent document, however, the DVD video title and HTML contents are only displayed in parallel. Thus, there is a problem that an expression performance of a video image or the like is insufficient. Further, there is a problem that security of distributed information is insufficient, and, if an address is known, such an address becomes available to an unspecified number of persons.

That is, in the prior art, the HTMP contents are merely displayed to be associated with an optical disk, and the expression performance of the video image or the like is not sufficiently provided. Further, if a server address is known, information is leaked to an unspecified number of persons. Therefore, there is a problem that the security of the distributed information is insufficient, thus making it difficult to supply highly value added information.

It is an object of the present invention to provide an optical disk apparatus and an optical disk processing method and an optical disk, wherein, using extensible information, a display size and a display position of a video title or extensible information are changed for each scene to compose the respective contents, display of a video title or extensible information is changed for each scene to increase the degree of freedom for expression of a video image or the like, and information contained in a disk and extensible information acquired via a communication line together with the disk contained information can be utilized together with security.

In view of the above described object, according to the present invention, there is provided an optical disk for reproducing at least one of a video image and a voice information from an optical disk, the optical disk apparatus comprises a control portion for, based on address information and authentication information read out from the optical disk, providing access to a specific server via a communication line to carry out authentication processing, thereby acquiring extensible information from the specific server; and a reproducing portion for reproducing and outputting the extensible information acquired by the control portion.

The optical disk apparatus according to the present invention has such a structure, whereby, based on address information or authentication information according to enhanced navigation (hereinafter, referred to as ENAV) contents, for example, which is extensible information recorded in an optical disk, access to an external web content distribution server is provided via the Internet using an Internet communication portion, and authentication processing is carried out. By the authentication processing, from a server which has checked validity of access, for example, ENAV contents which are extensible information are distributed. A reproducing portion reproduces the ENAV contents, for example, to output the contents as it is or to output the ENAV contents or DVD video contents detected from an optical disk, these contents being composed with each other. In this manner, for example, the video image contents reproduced by the optical disk and the latest video image information associated therewith are easily used via the Internet. In addition, access or authentication processing is carried out based on the information stored in the optical disk. Thus, even if a third party who does not have an optical disk knows a server address, authentication processing can be carried out.
Therefore, distribution of the ENAV contents, for example, which is extensible information, cannot be received, thus making it possible for a server to reliably distribute highly value added extensible information.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram depicting an example of configuration of an optical disk apparatus according to the present invention;
FIG. 2 is a view showing an example of configuration of an optical disk which the optical disk apparatus according to the present invention handles;
FIG. 3 is a view showing an example of an optical disk which does not have features of the optical disk which the optical disk apparatus according to the present invention handles;
FIG. 4A and FIG. 4B are views each showing an example of internal parameters which the optical disk apparatus according to the present invention has;
FIG. 5 is a flow chart showing an example of operation when the optical disk apparatus according to the present invention is started up;
FIG. 6 is a flow chart showing an example of production processing of ENAV contents which include web contents of the optical disk apparatus according to the present invention;
FIG. 7 is a view showing an example of configuration of the ENAV contents which the optical disk apparatus according to the present invention handles;
FIG. 8 is a flow chart showing an example of reproduction processing of web contents of the optical disk apparatus according to the present invention;
FIGS. 9A to 9D are illustrative views illustrating examples of displaying contents of an optical disk and the ENAV contents from a web which the optical disk apparatus according to the present invention handles;
FIG. 10 is a view showing an example of configuration of web contents which the optical disk apparatus according to the present invention handles;
FIG. 11 is a view illustrating a connection to a web content distribution server via a database server using the optical disk apparatus according to the present invention;
FIG. 12 is a flow chart showing an example of communication with a web content distribution server of the optical disk apparatus according to the present invention;
FIG. 13 is an illustrative view illustrating encode and/or decode processing of the ENAV contents of the optical disk apparatus according to the present invention;
FIG. 14 is a flow chart showing an example of eject processing of an optical disk of the optical disk apparatus according to the present invention; and
FIG. 15 is a view showing an example of a controller of the optical disk apparatus according to the present invention.

Hereinafter, an optical disk apparatus and an optical disk which the device handles according to preferred embodiments of the present invention will be described with reference to the accompanying drawings.

### <Optical disk according to the present invention>

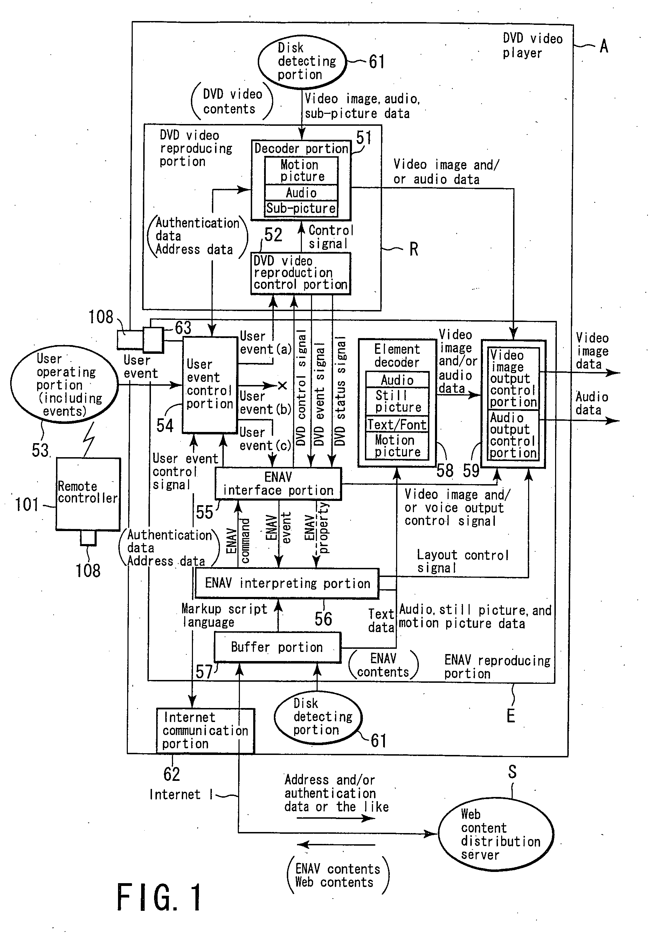

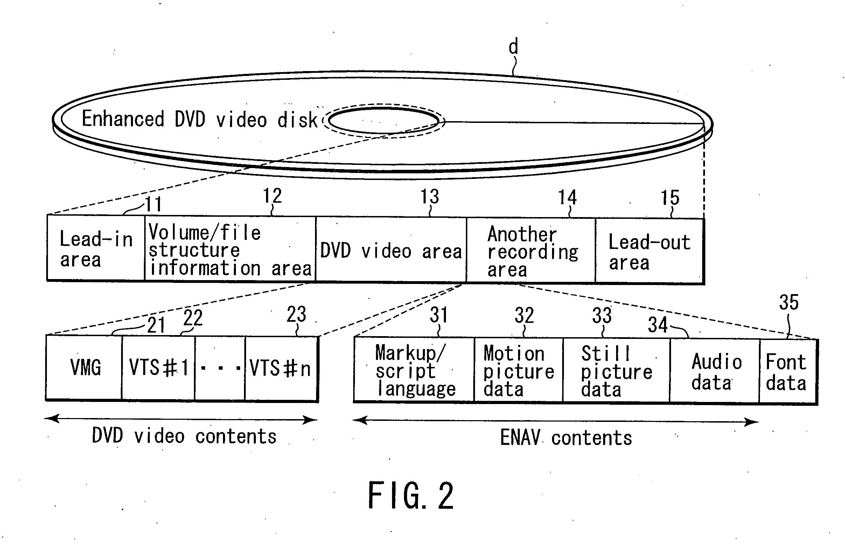

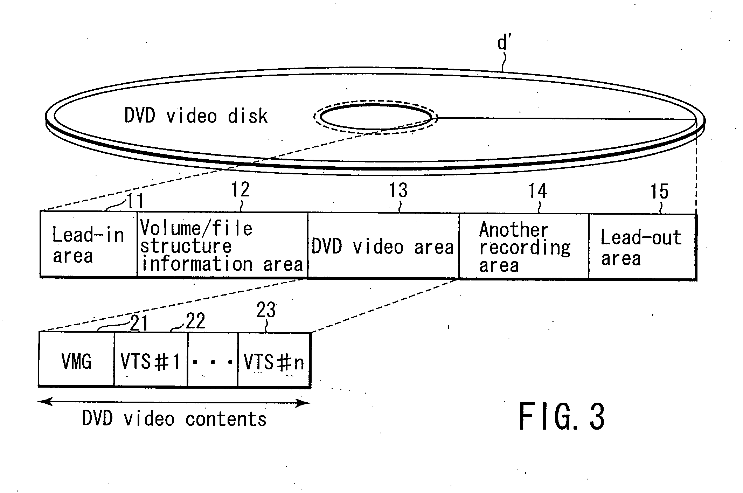

First, an example of optical disk which the optical disk apparatus according to the present invention handles will be described below with reference to the accompanying drawings. This optical disk considers compatibility with the existing DVD video specifications, and has the following data structure. FIG. 2 shows an example of data structure of a DVD video disk reproduced by in a DVD video player which is an optical disk shown in FIG. 1, which will be described later. FIG. 2 shows an enhanced DVD video disk in which the DVD video contents (having an MPEG2 program stream) with a data structure identical to that in the existing DVD video specifications are stored in a DVD video area so that enhanced navigation (hereinafter, simply referred to as ENAV) which is extensible information can be recorded in another recording area in which the entity is recognized in the DVD video specifications. The ENAV contents are a generic name for a still picture, a voice, animation, or a markup language and the like, and reproduction of the video contents can be diversified. For reference, FIG. 3 shows a DVD video disk which does not have ENAV contents in a DVD video area.

Here, the content of a DVD video area will be briefly described.

That is, in FIG. 2, a recording area of a DVD video disk "d" includes a lead-in area 11, a volume space 12, and a lead-out area 15 in order from the inner periphery. A volume space includes a volume/file structure information area 12 and a DVD video area (DVD video zone) 13, and further, can include another recording area (DVD other zone) 14 optionally.

The above described volume/file structure information area 12 is an area allocated for a UDF (Universal Disk Format) bridge structure. A volume of the UDF bridge format is designed to be recognized in accordance with Part 2 of ISO/IEC13346. A space for recognizing this volume consists of continuous sectors, and starts from a first logical sector of the volume space in FIG. 2 and FIG. 3. The. first 16 logical sectors are reserved for system use specified under ISO9660. A volume/file structure of such contents are required to ensure compatibility with the existing DVD video specifications.

In addition, the above described DVD video area records management information called a video manager VMG12 and one or more video contents such as video title sets (VTS#1 to VTS#n) 22 and 23. VGM21 is management information for all the VTSs which exist in the DVD video area. Although it is not shown, control data VMG1, VMG menu data VMGM_VOBS (option), and VMG backup data are included. In addition, although it is not shown, each VTS includes its VTS control data VTS1; VTS menu data VTSM_VOBS (option); data VTSTT_VOBS on the contents (such as cinema) of the VTS (title); and VTS1 backup data. A DVD video area of such contents is required to ensure compatibility with the existing DVD video specifications.

The reproduction selection menu or the like of each title (VTS#1 to VTS#n) is assigned in advance by a provider (producer of DVD video disk) using VMG. The reproduction chapter menu selection in a specific title (for example, VTS#1) or procedures for reproducing recorded contents (cells) are assigned in advance by a provider using VTS1. Therefore, a disk audience (a DVD video player user) can enjoy the recorded contents of that disk "d" in accordance with the VMG/VTS1 menu provided by a provider and the reproduction control information (program chain information PGCI) contained in VTSI. However, in the existing DVD video specifications, the audience (user) can not reproduce the contents (video or music) of VTS in accordance with a method which differs from the VMG/VTSI provided by a provider.

The optical disk according to the present invention is an enhanced DVD video disk as shown in FIG. 2, whereby the contents (cinema or music) of VTS can be reproduced in accordance with the method which differs from the VMG/VYSI provided by a provider, or alternatively, the ENAV contents can be reproduced, for example.

That is, the ENAV contents included in this disk are provided in another recording area 14 described above. As an example, there are provided a markup/script language 31, motion picture data 32, still picture data 33, and voice data 34. Such ENAV contents cannot be accessed by a DVD video player manufactured under only the existing DVD video specifications (even if an access can be provided, its contents cannot be utilized). Access can be provided by a DVD video player (such as optical disk apparatus A shown in FIG. 1) together with an ENAV reproducing portion according to the present invention, and its contents of reproduction can be utilized.

### (ENAV contents)

Here, the ENAV contents are configured to include data such as voice, still picture, text, and motion picture and information for controlling reproduction of these data (described in a markup/script language). For the information for controlling reproduction thereof, the ENAV contents (composed of voice, still picture, text, and motion picture) and/or method for reproducing DVD video contents (such as display method, reproduction procedures, reproduction switching procedures, or selection of a reproduction target) are described-by using a markup language or a script language. For example, an HTML (Hyper Text Makeup Language) / XHTML (eXtensible Hyper Text Makeup Language) or SMIL (Synchronized Multimedia Integration Language) which is a markup language and an ECMA (European Computer Manufactures Association) script or Java script which is a script language can be used in combination.

In addition, the enhanced DVD video disk of FIG. 2 conforms to the existing DVD video specifications in contents other than those of another recording area. Thus, even if the existing DVD video player is used, the video contents recorded in a DVD video area can be reproduced. That is, compatibility with a device type earlier than an optical disk apparatus which assumes an enhanced VD video disk is provided.

However, although the ENAV contents recorded in another recording area cannot be reproduced (utilized) by the existing DVD video player, they can be reproduced and utilized in the optical disk apparatus according to the present invention shown in FIG. 1. Therefore, the ENAV contents are reproduced by using the optical disk apparatus according to the present invention, thereby making it possible to utilize more various video image expressions rich in variety according to the ENAV specifications without being limited to the contents of VMG/VTSI provided in advance by a provider.

In the optical disk "d" which is an enhanced DVD video disk according to the present invention, there is provided address information on a web content distribution server S connected to the above described ENAV contents via the Internet and information used for authentication processing, whereby, as described below, while high security is ensured, the information contained in a disk and the enhanced navigation contents connected thereto via a communication line can be utilized concurrently.

The address information on the web content distribution server S connected to the Internet and the information used for authentication processing may be provided in video management information on DVD video contents or video title set VTS22, for example, without being always provided in the above described ENAV contents. In addition, even if the above information is provided in another region, the operation and advantageous effect of the present invention can be achieved as long as an access operation or authentication operation of the optical disk apparatus according to the present invention described below is enabled.

### <Optical disk device according to the present invention>

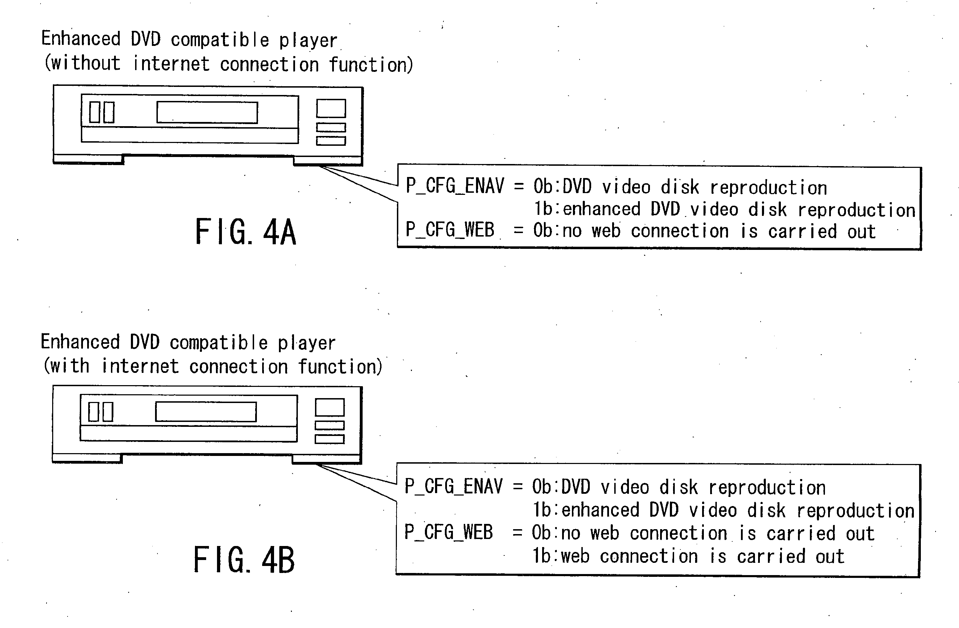

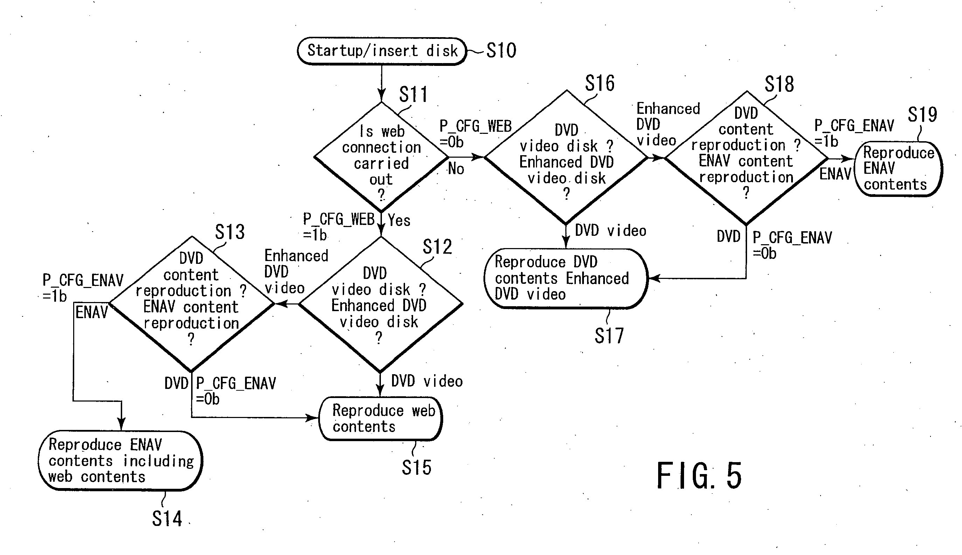

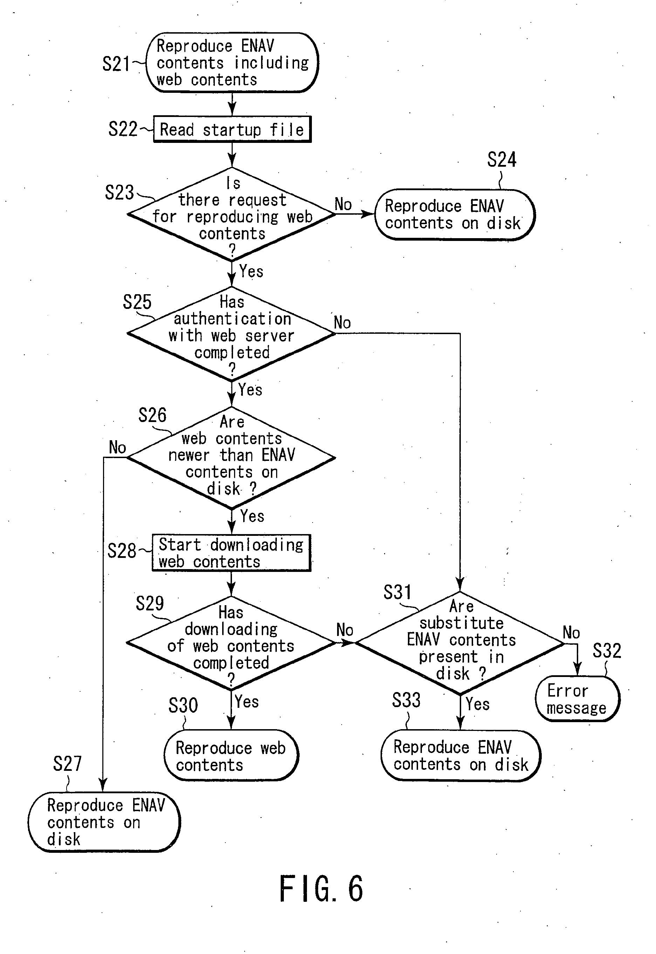

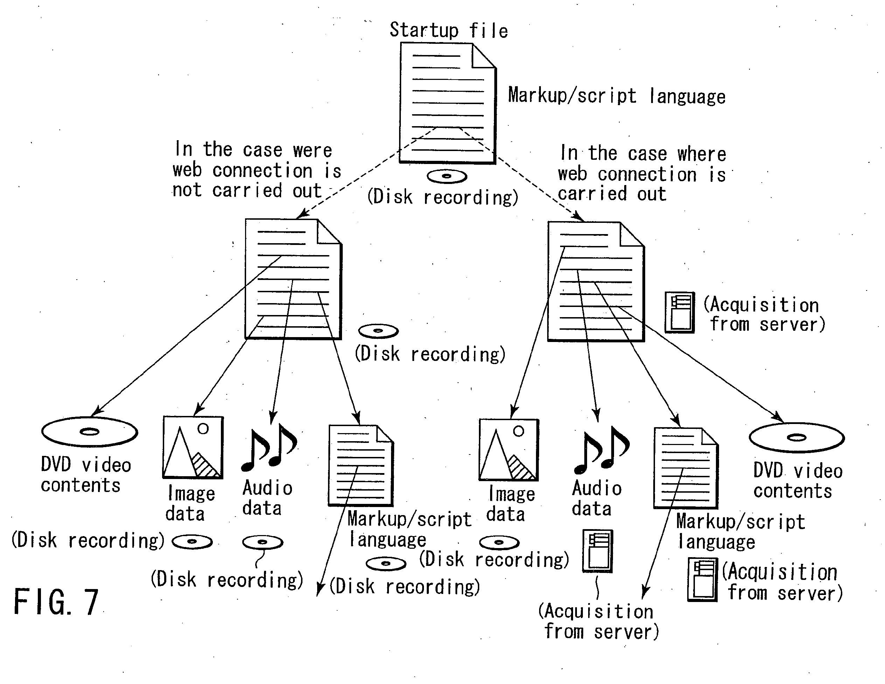

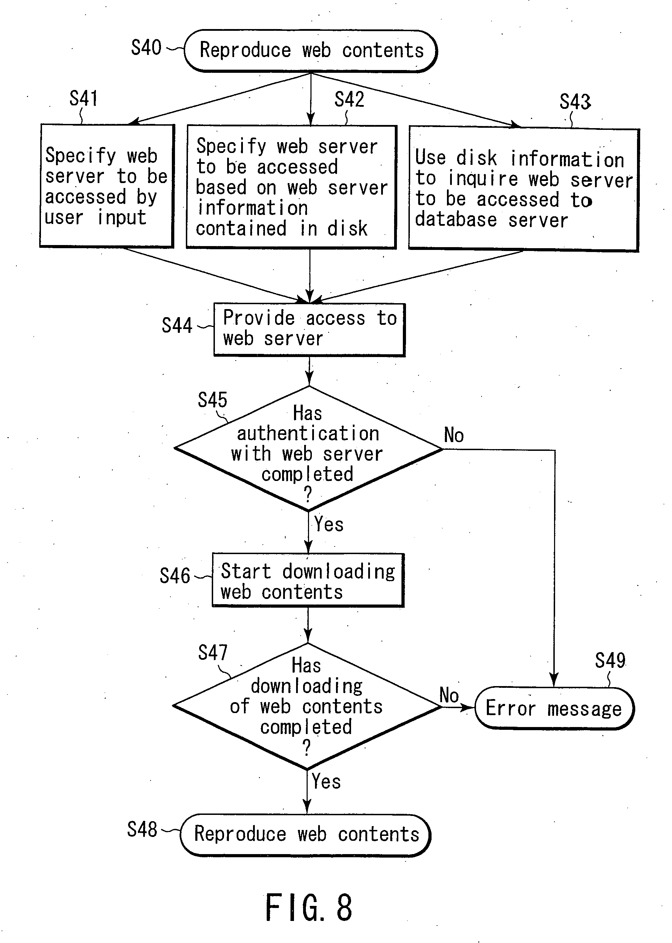

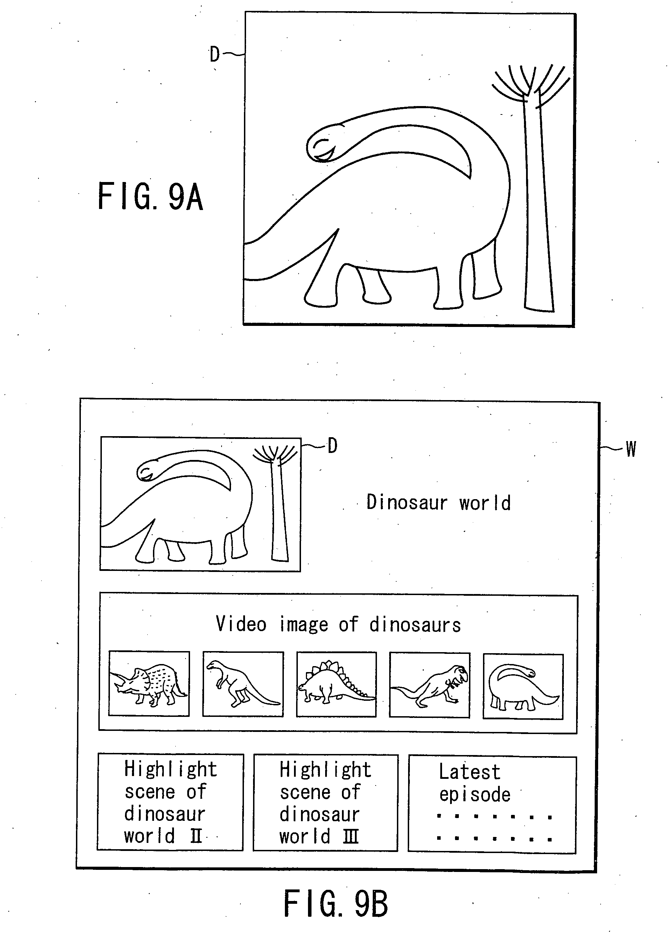

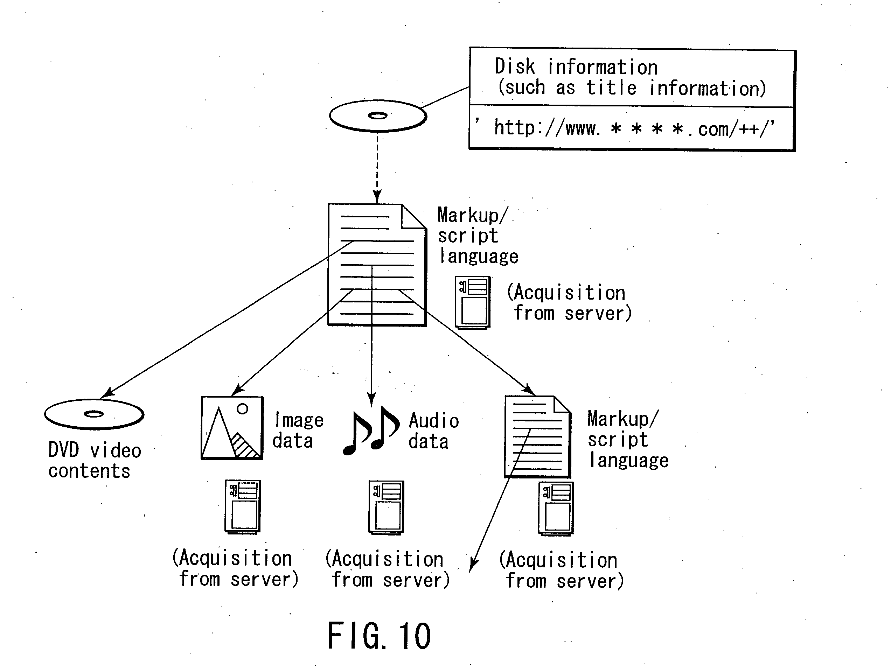

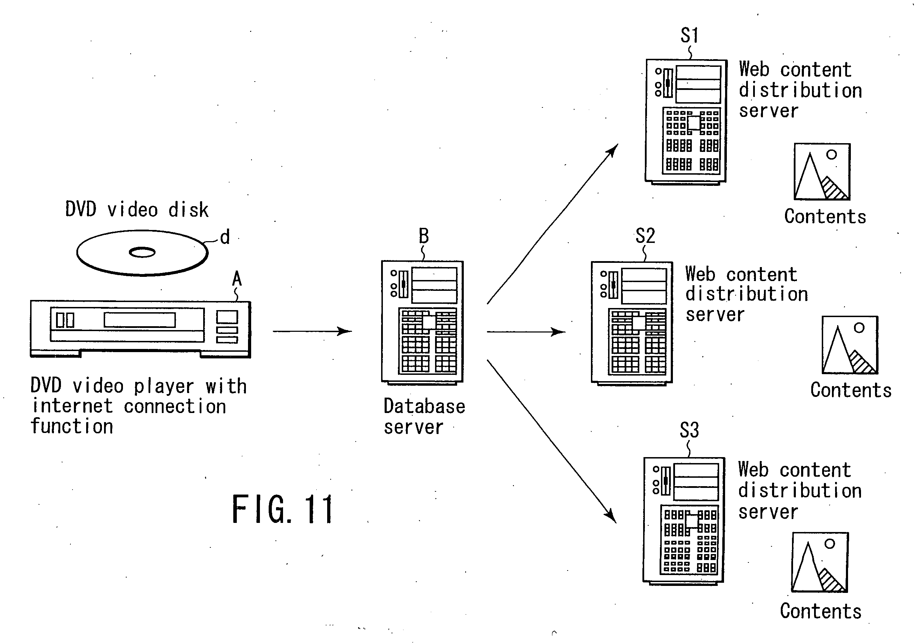

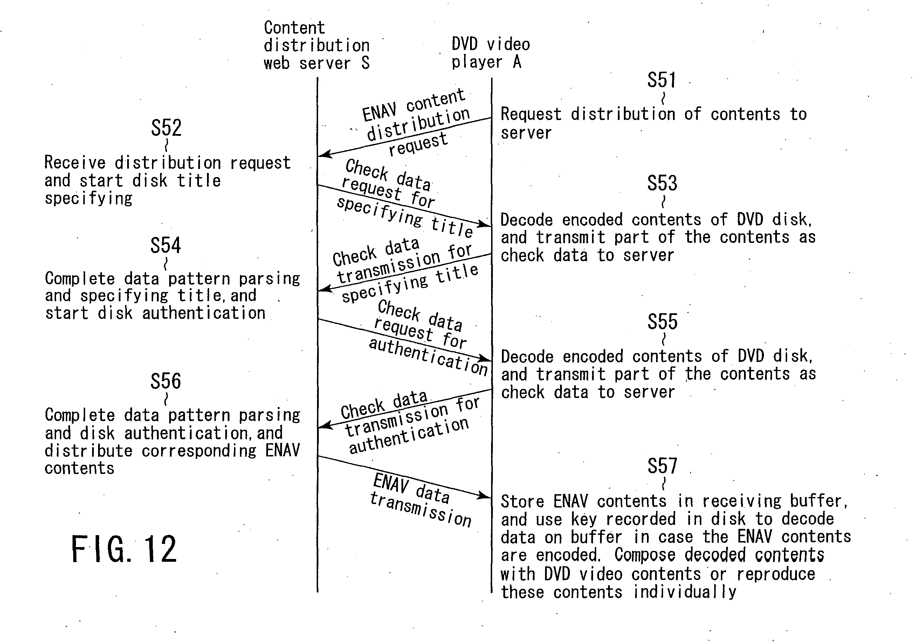

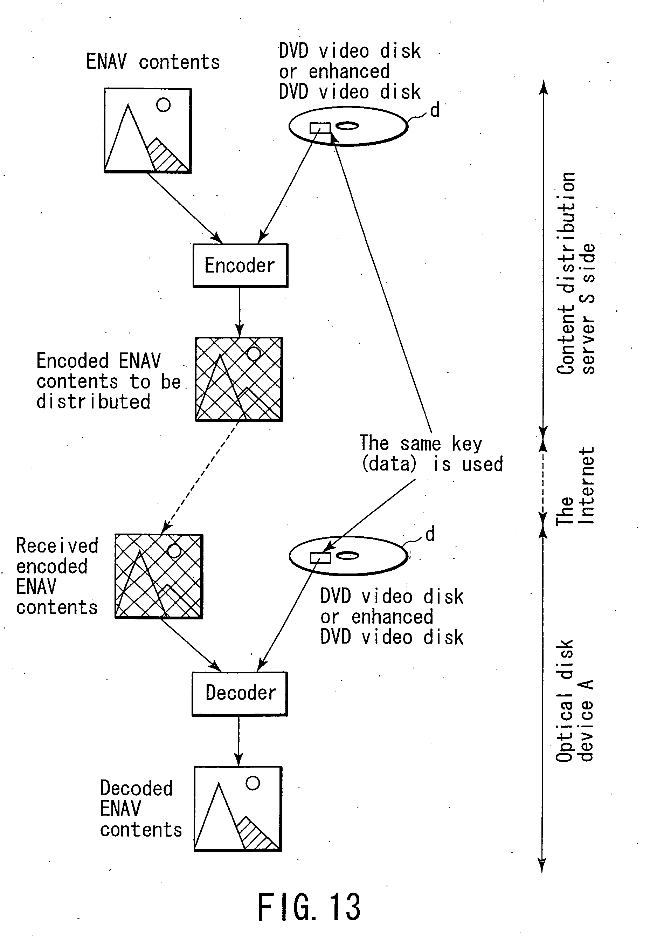

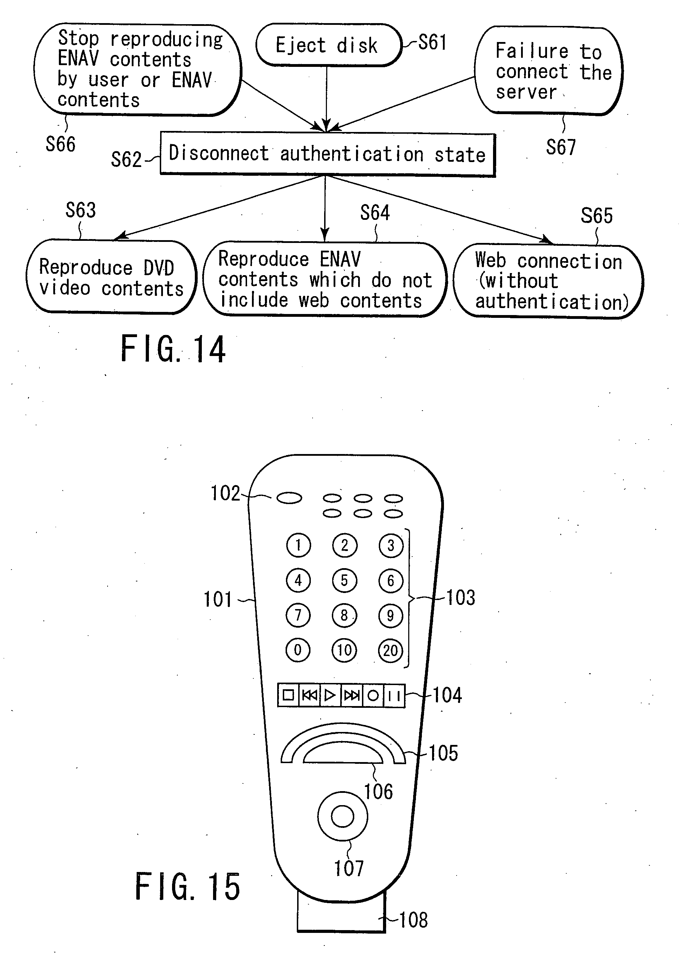

Now, an optical disk apparatus according to the present invention will be described below with reference to the accompanying drawings. FIG. 1 is a block diagram depicting an example of configuration of the optical disk apparatus according to the present invention. FIG. 4A and FIG. 4B are views each showing an example of internal parameters. FIG. 5 is a flow chart showing an example of operation during startup. FIG. 6 is a flow chart showing an example of reproduction processing of ENAV contents including web contents. FIG. 7 is a view showing an example of configuration of ENAV contents which the optical disk apparatus according to the present invention handles. FIG. 8 is a flow chart showing an example of reproduction processing of web contents. FIGS. 9A to 9D are illustrative views illustrating examples of displaying contents of the optical disk and the ENAV contents from a web by the optical disk apparatus according to the present invention. FIG. 10 is a view showing an example of configuration of web contents which the optical disk apparatus according to the present invention handles. FIG. 11 is a view illustrating connection to a web content distribution server via a database server using the optical disk apparatus according to the present invention. FIG. 12 is a flow chart showing an example of communication with the web content distribution server. FIG. 13 is an illustrative view illustrating encode and/or decode processing of ENAV contents. FIG. 14 is a flow chart showing an example of eject processing of an optical disk. FIG. 15 is a view showing an example of controller.

The optical disk apparatus according to the present invention acquires and reproduces ENAV contents which is extensible information from a server via the Internet based on enhanced navigation contents while reproducing an optical disk having the above described ENAV contents. In this manner, the ENAV contents included in a disk and the acquired ENAV contents are selectively reproduced in addition to reproduction of the existing DVD contents, thereby making it possible to carry out a variety of reproduction processes. In addition, high security can be ensured by carrying out authentication processing, thus making it possible to distribute highly value added ENAV contents limited to a case having a disk. Further, individual authentication is carried out, thereby making it easier to carry out E-commerce via the Internet, for example.

### (Configuration of optical disk apparatus)

A configuration of an optical disk apparatus according to the present invention will be described with reference to FIG. 1. An optical disk apparatus A according to the present invention carries out processing for reproducing the recorded contents (DVD video contents and/or ENAV contents) from an enhanced DVD video disk having compatibility with the existing DVD video specification shown in FIG. 2. In addition, this device carries out processing for taking out ENAV contents (referred to as web contents) which is extensible information from a communication line such as the Internet.

### - General description

An example of configuration of the optical disk apparatus A according to the present invention, as shown in FIG. 1, can be divided into: a disk detecting portion 61 for mounting an optical disk, rotating the disk at a predetermined rotation frequency, irradiating a laser beam by a light pickup, and receiving reflection light, thereby detecting DVD video contents and/or ENAV contents recorded in a disk "d"; a DVD video reproducing portion R for reproducing and processing an MPEG2 program stream (DVD video contents) recorded on the disk "d"; an ENAV reproducing portion E for reproducing ENAV contents; a user operating portion 53 for inputting user operation information including an external remote controller 101; and an Internet communication portion 62 for making connection to a communication line I such as the Internet, and acquiring contents or the like from a web content server S or the like. Now, a detailed description of each section will be given below.

In addition, in the block configuration of FIG. 1, the DVD video reproduction control portion 52; a user event control portion 54 included in an ENAV reproducing portion E; an ENAV interface portion 55; an ENAV interpreting portion 56; and a buffer portion 57 or the like can be achieved by a microcomputer (and/or firmware) which serves as a function for block configuration by a built-in program (firmware) not shown). A work area used for executing this firmware can be obtained by using a semiconductor memory (and a hard disk as required) not shown in each block configuration.

An optical disk which the optical disk apparatus A according to the present invention handles records DVD video contents having the MPEG2 program stream structure and information (such as video image information such as motion picture, still picture, or animation, voice information, text information, or link information) other than the MPEG2 program stream structure. In addition, web contents consisting of video image information acquired from the Internet or the like, voice information, text information, and link information or the like are captured as ENAV contents in an optical disk.

### - DVD video reproducing portion

A DVD video reproducing portion R is configured for reproducing DVD video contents based on the existing DVD video specifications. This portion is configured to include: a decoder portion 51 for decoding the DVD video contents read from a disk detecting portion 61; and a DVD video reproduction control portion 52 for carrying out reproduction control of the DVD video contents.

The decoder portion 51 has a function for decoding video image data, voice data, and sub-picture data, based on the existing DVD video specifications, and outputting the decoded video image and/or voice data. In this manner, the DVD video reproducing portion R has the same function as a general DVD video player's reproduction engine manufactured based on the existing DVD video specifications. Namely, the optical disk apparatus A shown in FIG. 1 can reproduce a video image and voice or the like having an MPEG2 program stream structure in the same manner as the DVD video player, thereby enabling reproduction of the existing DVD video disk (a disk conforming to the existing DVD video specifications).

The DVD video reproduction control portion 52 is configured so as to control reproduction of the DVD video contents according to a "DVD control signal" outputted from the ENAV reproducing portion E. Specifically, the DVD video reproduction control portion 52 can output a "DVD event signal" indicating a reproduction state of DVD video contents relevant to the ENAV reproducing portion E when an event (for example, a menu call or title jump) occurs during DVD video reproduction. At this time (at a proper timing at the same time or before and after output of a DVD event signal), the DVD video reproduction control portion 52 can output to the ENAV reproducing E a "DVD status signal" indicating DVD video player's property information (such as voice language set in player, sub-picture superimposition language, reproduction operation, reproduction position information, time information, and contents of disk, for example).

### - ENAV reproducing portion

An ENAV reproducing portion E is configured to include a user event control portion 54, an ENAV interface portion 55, an ENAV interpreting portion 56, an element decoder 58, and a video image and/or voice output control portion 59. The user event interpreting portion 54 used here generates a user event which corresponds to a user operation of a DVD video reproducing apparatus. The ENAV interpreting portion 56 (language interpreting portion) parses and interprets the contents of reproduction control information included in the ENAV contents. The ENAV interface portion 55 (information processing portion) parses a syntax at the ENAV interpreting portion 56, and executes a command (ENAV command) included in the interpreted reproduction control information. The element decoder 58 generates video image and/or voice data which corresponds to the other contents (data such as voice, still picture, text, and motion picture) included in the ENAV contents. An output portion (video image and/or voice output control portion 59) outputs the video image and/or voice-data generated by' the element decoder 58, the data being composed with video image and/or voice data reproduced by the DVD video reproducing portion R, based on an execution result of an ENAV command at the ENAV interface portion 55. Alternatively, this control portion selectively outputs one of the reproduced video image and/or voice data on the DVD contents.

Now, a description of each portion will be given here in more detail.

### - Buffer portion

A buffer portion -57 temporarily stores information contained in a disk "d" which a disk detecting portion 61 has detected, or alternatively, the ENAV contents captured from an Internet communication portion 62 described later, and sends them to an ENAV interpreting portion 56 or an element decoder 58. By capturing the ENAV contents in the buffer portion 57, even when the DVD video contents and ENAV contents are reproduced at the same time, seamless reproduction of the DVD video contents can be achieved. Otherwise, the disk detecting portion 61 needs to access the DVD video contents contained in the disk "d" and the ENAV contents at a high speed, making it harder to carry out seamless reproduction.

### - User event control portion

A user event control portion 54 is provided to carry out control based on a user operation. This control portion is configured so as to receive a user event corresponding to the user operation (menu call, title jump, reproduction start, reproduction stop, reproduction pause or the like) from a user operating portion 53, or alternatively, so as to receive a user event control signal from an ENAV interface 55, thereby generating the user events (a) to (c) corresponding to the contents of the user operation or user event control signal.

Here, the user event control portion 54 carries out the following operations for the user event signal transmitted by the user operation based on the "user event control signal" outputted from the ENAV interface portion 55.
(1) Transmitting to a DVD video reproduction control portion 52 of a DVD video reproducing portion R (user event signal ("a"));
(2) Disabling (X) transmission (user event signal (b)); and
(3) Transmitting to the ENAV interface portion 55 (user event signal (c)).

At this time, the following control is carried out to transmit the above described user event signal.
(11) In the case of outputting a video image of the DVD video reproducing portion R (full video mode), the user event signal (a) is directly outputted to the DVD video reproducing portion R. This is because the user operation in the full video mode is the same as that during general DVD video reproduction.
(12) In the case of outputting a video image of an ENAV reproducing portion E (full ENAV mode), or alternatively, in the case of outputting the video image of the DVD video reproducing portion R and the video image of the ENAV reproducing portion E to be composed at the same time (mixed frame mode), the following control is carried out.
(121) When the user event signal (user event signal (c)) is outputted to the ENAV interface portion 55, the ENAV interface portion 55 outputs a function call corresponding to that event (such as menu call) as a DVD control signal to the DVD video reproduction control portion 52 of the DVD video reproducing portion R.
(122) The user events (user event signal (a) and user event signal (c)) are outputted to both of the DVD video reproducing portion R and the ENAV interface portion 55 at the same time.
(123) In the case where there is a possibility that reproduction of the DVD video which the system does not intend to carry out is carried out (for example, if there is provided a reproduction method which cannot be carried out at the DVD video reproducing portion R being currently operated or operation is disabled by the user operation control UOP defined under the current DVD specifications), transmission of the user event signal is blocked (disabled or inhibited) ("X" of the user event signal (b)).

The content of the user event signal (c) transmitted to the ENAV interface portion 55 can be configured so as to be sent to the ENAV interpreting portion 56 properly in the form of an ENAV event (and/or ENAV property). Then, the ENAV interpreting portion 56 can create a layout control signal by referring to the content of the user event signal (c).

For example, in the case where contents or window size are or is changed by a cursor key 107 of a remote controller 101 shown in FIG. 15 and an operation for shifting that display position is made, that operation is fed as the user event signal (c) from the user event control portion 54 to the ENAV interface portion 55. Then, the user event signal is converted into the corresponding ENAV event (such as window size change event) and/or ENAV property (such as variable/parameter indicating a window size after changed), and then, the converted event can be fed to a video image output control portion 59 after converted into the corresponding layout control signal.

Here, a remote controller 101 supplies an operating signal or the like from the user to the user operating portion 53. As an example, as shown in FIG. 15, this controller 101 has: a power switch; an output mode selection switch or the like 102, an input key 103; operating switches 104 such as stop, scan, reproduction, scan, recording (if a recording function is provided), and temporary stop keys; a cursor key 107 for operating a cursor on a screen generated by an output signal; a determination key 106; and a release key 105. An IC card 108 which is a detachable recording medium enables that personal authentication or the like is mounted, making it possible to read out or write information.

In addition, this IC card 108 may read and write information for personal authentication by providing an IC card interface 63 in a main body of an optical disk apparatus.

### - ENAV interface portion

An ENAV interface portion 55 transmits or receives a DVD status signal, a DVD event signal, and/or a DVD control signal to or from a DVD video reproduction control portion 52. Alternatively, this interface portion transmits or receives a user event and/or a user event control signal to or from a user event control portion 54. The ENAV interface portion 55 is further configured so as to transmit or receive an ENAV event, an ENAV property, and/or an ENAV command to or from an ENAV interpreting portion 56. That is, the ENAV interface portion 55 is configured so as to serve as an interface between a DVD video reproducing portion R and an ENAV reproducing portion E by outputting the inputted DVD status signal as an ENAV property, outputting the inputted DVD event signal as an ENAV event signal, or outputting the inputted DVD event signal as an ENAV event signal, or converting the inputted DVD event signal into the corresponding DVD control signal to be outputted. Then, the ENAV interface portion 55 feeds a signal for controlling an output state of a video image and/or voice to a video image and/or voice output control portion 59 according to the user event from the user event control portion 54 and/or the content of the ENAV command from the ENAV interpreting portion 56.

In addition, when attention is paid to signal exchange, the ENAV interface portion 55 is configured so as to exchange a first signal (DVD control signal, DVD event signal; or DVD status signal) concerning a video- disk reproduction state with the DVD video reproduction control portion 52 based on the content (command) interpreted by the ENAV interpreting portion 56 or the user event from an input unit and to exchange a second signal (ENAV event, ENAV command, or ENAV property) concerning the content (script) of ENAV contents with the ENAV interpreting portion 56. This interface portion controls a signal output state by the video image and/or voice output control portion 59 based on at least one of the exchanged first signal and second signal.

With respect to signal processing, the ENAV interface portion 55 interprets the ENAV contents, and converts a control signal between the DVD video reproducing portion R and the ENAV reproducing portion E. Specifically, a processing portion carries out the following signal output/signal conversion, for example.
<a> After interpreting the ENAV contents, the processing portion outputs (a) a "user event control signal" for controlling a user event corresponding to a user operation inputted from a user operating portion 53; (b) a "DVD control signal" for controlling reproduction of DVD video contents in the DVD video reproducing portion R; and/or (c) a "video image and/or voice output control signal" for switching a video image and/or voice output from the DVD video reproducing portion R and a video image and/or voice output from the ENAV reproducing portion E.
<b> The processing portion interprets the content (such as menu call or title jump) of a "DVD event signal" indicating a reproduction state of the DV video contents fed from the DVD video reproducing portion R, and converts the content of the interpreted DVD event signal into the corresponding event signal defined in the ENAV contents (for example, it converts a DVD event signal of a menu call into an event signal of a menu call in ENAV).
<c> The processing portion interprets the content (such as what voice language is or whether or not disk reproducing operation is currently in progress) of a "DVD status signal" indicating property of a DVD video player fed from the DVD video reproducing portion R, and converts the interpreted content into the corresponding property signal defined in ENAV contents (for example, it converts a DVD status signal indicating that the currently used voice language is Japanese into a property signal for specifying a language used in ENAV as Japanese).

### - ENAV interpreting portion

In general, an ENAV interpreting portion 56 has a 'function for parsing and interpreting the ENAV contents obtained from a DVD video disk or the reproduction control information included in the ENAV contents obtained from the Internet or the like, thereby moving the ENAV reproducing portion E. The previously described markup language such as HTML/XHTML or SMIL may be used for this reproduction control information, or alternatively, script languages such as ECMAScript or JavaScript may be used together with the previously described markup language.

A specific method for parsing and interpreting a markup or script may be a technique similar to parsing or interpretation in the publicly known art such as HTML/XHTML and SMIL or ECMAScript or JavaScript (the hardware used here is a microcomputer described at the beginning of description of FIG. 1). For commands or variables described in script, a difference occurs because of a different control target. For reproduction control information used for carrying out the present invention, there are used specific commands or variables associated with reproduction of the DVD video disk and/or ENAV contents. For example, a command for switching the content of reproduction of the DVD video or ENAV contents in response to an event is specific to a markup or script in reproduction control information.

As another example of commands and variants specific to a markup or script in reproduction control information, the size of the video image from the DVD video reproducing portion R and/or ENAV reproducing portion E (a command for instructing change in size and a variable for specifying a size after changed) and the location of the image is changed (a command for instructing a change of a display position and a variable for specifying a coordinate or the like after changed: A variable for specifying a relationship between top and bottom positions for overlap is added when a display target is overlapped on a screen). Alternatively, the voice level from the DVD video reproducing portion R and/or ENAV reproducing portion E is changed (a command for instructing a change in a voice level and a variable for specifying a voice level after changed), and a voice language to be used is selected (a command for instructing a change in a voice language used and a variable for specifying type of language after changed). In addition, the user event control portion 54 controls a user event (changes a user event signal (a), a user event signal (b), and a user event signal (c)).

Based on the command/variable of a markup or script for reproduction control information exemplified above, a "layout control signal" for controlling the layout on the screen, of a video image to be displayed on an external monitor unit (not shown); the size of a video image; the output timing of a video image; an output time of a video image and/or a volume level of voice to be reproduced from an external speaker (not shown); an output timing-of voice; and an output time of voice, is fed from the ENAV interpreting portion 56 to the video image and/or voice output control portion 59.

### Element decoder

An element decoder 58 decodes data such as voice, still picture, text, or motion picture included in ENAV contents. This decoder includes a voice decoder corresponding to a decode target, a still picture decoder, a text decoder, and a motion picture decoder. For example, the voice data in the ENAV contents encoded in MPEG1 is decoded by means of the voice decoder, and the decoded voice data is converted into non-compression voice data. In addition, the still picture data encoded in MPEG or JPEG is decoded by means of the still picture decoder, and the decoded data is converted into non-compression image data. Similarly, for example, the motion picture data encoded in MPEG2 is decoded by means of the motion picture decoder, and the decoded data is converted into non-compression motion picture data. In addition, the text data included in ENAV contents is decoded by means of the text decoder, and the decoded data is converted into text image data which can be superimposed on a motion picture or still picture image. The video image and/or voice data properly including these decoded voice data, image data, motion picture data, and text image data are fed from the element decoder 58 to the video image and/or voice output control portion 59.

### - Video image and/or voice output control portion

The video image and/or voice output control portion 59 switches and selects the video image and/or voice data decoded by means of the element decoder 58 and the video image and/or voice data outputted from the DVD video reproducing portion R, or alternatively, properly composes both of these data. This control portion is configured to include a video image output control portion and a voice output control portion.

The video image output control portion 59 has: a function for selecting a video image from the DVD video reproducing portion R or a video image from the ENAV reproducing portion E; and a function for changing the size of a video image and/or moving the location of the image, and outputting both of the video images at the same time. Specifically, this control portion 59 can be composed of a digital video image mixer and/or switcher or the like.

The video image output control portion 59 at the ENAV reproducing portion E is configured so as to carry out any of outputting a video image from the DVD video reproducing portion R (full video mode), outputting a video image from the ENAV reproducing portion E (full ENAV mode), and outputting both of the video image from the DVD video reproducing portion R and the video image from the ENAV reproducing portion E to be composed with each other (mixed frame mode), based on the "video and/or voice output control signal" outputted from the ENAV interface portion 55 and/or the "layout control signal" outputted from the ENAV interpreting portion 56.

In addition, the video image output control portion 59 has functions for:
(1) in the case where a video image is outputted from only the DVD video reproducing portion R and no video image is outputted from the ENAV reproducing portion E, selecting a video image output of the DVD video reproducing portion R as a video image of the DVD video player;
(2) in the case where a video image is outputted from only the ENAV reproducing portion E and no video image is outputted from the DVD video reproducing portion R, selecting a video image output of the ENAV reproducing portion E as a video image of the DVD video player; and
(3) switching and selecting the video image output of the DVD video reproducing portion R and/or the video image output of the ENAV reproducing portion E in accordance with an output method selected by a user from a user operating portion 53.

Further, this control portion 59 can start or terminate an output of a video image at. a specified timing via a layout control signal, continue an output of a video image for a specified time, or output a video image at a specified position (for example, chapter number or time information).

In addition, the voice output control portion 59 has a function for selecting a voice from the DVD video reproducing portion R and a voice from the ENAV reproducing portion E and a function for carrying out a volume level change and/or mixing of respective voices and outputting a composition of both of the voices. Specifically, this control portion 59 is composed of a digital voice mixer and/or switcher or the like.

That is, the voice output control portion 59 is configured so as to carry out any of outputting a voice from the DVD video reproducing portion R, outputting a voice from the ENAV reproducing portion, and composing and outputting both of the voice from the DVD video reproducing portion R and the voice from the ENAV reproducing portion E, based on the "video image and/or voice output control signal" outputted from the ENAV interface portion 55 and/or the "layout control signal" outputted from the ENAV interpreting portion 56. For example, in the case where both of the voice from the DVD video reproducing portion R and the voice from the ENAV reproducing portion E are outputted to be composed with each other, the voice output control portion 59 adjusts and mixes the levels of these voices with each other, and outputs voice data.

In addition, the voice output control portion 59 has functions for:
(1) in the case where a voice is outputted from only the DVD video reproducing portion R and no voice is outputted from the ENAV reproducing portion E, selecting a voice output of the DVD video reproducing portion R as voice data of the DVD video player;
(2) in the case where a voice is outputted from only the ENAV reproducing portion E and no voice is outputted from the DVD video reproducing portion R, selecting a voice output of the ENAV reproducing portion E as voice data of the DVD video player; and
(3) switching and selecting the voice output of the DVD video reproducing portion R and/or the voice output of the ENAV reproducing portion E in accordance with an output method selected by a user from a user operating portion 53.

Further, this control portion 59 can start or terminate an output of voice at a specified timing via a layout control signal, continue an output of voice for a specified time, or output a voice at a specified position (for example, chapter number or time information).

### - Interface

An Internet communication portion 62 is an interface for receiving ENAV contents from a communication line such as the Internet, and feeding reproduction control information included in the received contents to an ENAV interpreting portion 56 via a buffer portion 57. Further, this communication portion feeds the data (such as voice data, still picture data, text data, or motion picture data) included in the received ENAV contents to the element decoder 58 via the buffer portion 57.

Further, as an interface function which the buffer portion 57 has, the ENAV reproducing portion E has an interface function for feeding reproduction control' information included in ENAV contents read from the DVD video disk to the ENAV interpreting portion 56 via the buffer portion 57 and for feeding the data included in the read ENAV contents (such as voice data, still picture data, text data, or motion picture data.

### - Setting operating mode

In the optical disk apparatus A according to the present invention, as shown in FIG. 4A and FIG. 4B, a player configuration information parameter is enhanced so as to set an operating mode for whether or not to select an enhanced DVD reproduction function and an Internet connection function. FIG. 4A shows an enhanced DVD compatible player. FIG. 4B shows an enhanced DVD compatible player. This player has an Internet connection function, 'and selection of respective functions can be set as an operating mode by changing the extensible player configuration information.

That is, the optical disk apparatus A according to the present invention enables reproduction of the enhanced DVD video disk shown in FIG. 2 and the existing DVD video disk shown in FIG. 3. Thus, in the case of reproducing the enhanced DVD video disk shown in FIG. 2, both of the DVD video contents and ENAV contents can be reproduced as an enhanced DVD video disk and only the DVD video contents can be reproduced as a DVD video disk. This reproduction is assumed to be carried out in the case where a user makes a selection or in the case where a device makes a selection.

In the existing DVD video player, in the case where a parameter (P_CFG) indicating player configuration information maintained in the player which is invalid as a reserved region is extended to be P_CFG_ENAV and an enhanced DVD video disk is reproduced, an operating mode for reproduction of the enhanced DVD video disk (reproduction based on reproduction information on ENAV contents) or reproduction of the DVD video disk (reproduction based on management information on DVD contents) can be set.

For example, the operating mode is set as follows:
P_CFG_ENAV = 0b : DVD video disk reproduction
1b : Enhanced DVD video disk reproduction.

In the existing player in which the enhanced DVD video cannot be reproduced (in which ENAV contents cannot be reproduced), 0b representing a reserved region has already been set as this value. As shown in FIG. 4A and FIG. 4B, a player in which the enhanced DVD video can be reproduced (in which ENAV contents can be reproduced) can set either "0b" representing DVD video disk reproduction or "1b" for enhanced DVD video disk reproduction. This value is obtained by reflecting as P_CFG_ENAV a value which the user sets by using a device setting menu or the like which the player has, according to one's preference. Alternatively, the player may switch a value of P_CDG_ENAV automatically.

In addition, the optical disk apparatus A according to the present invention comprises an Internet communication portion 62. This disk device can download ENAV contents from a dedicated server to the buffer portion 57 and reproduce (decode) the ENAV contents. At this time, as an operating mode, a parameter (P_CFG) indicating player configuration information maintained in the player is extended to be P_CFG_WEB so as to select whether or not to make connection to the Internet, or alternatively, it is possible to discriminate whether or not to make Internet connection or whether or not an Internet connection function is present.

For example, Internet connection is set as follows:
P_CFG_WEB = 0b : Without Internet connection
1b : With Internet connection

As shown in FIG. 4A, in the enhanced DVD compatible player which does not have an Internet connection function, "0b" representing a reserved region as this value has already been set as an unoccupied region. As shown in FIG. 4B, the enhanced DVD compatible player having an Internet connection function can set either "0b" representing that no Internet connection is carried out or "1b" representing that Internet connection is carried out. The enhanced DVD compatible player having an Internet connection function shown in FIG. 4B can set a value of P_CFG_WEB automatically, and the user can set the value manually. For example, the user discriminates a network state, selects whether Internet connection is performed or not on a device setting menu or the like which the player has, and reflects this to a value of P_CFG_WEB. Alternatively, the player discriminates a network state automatically, and automatically switches a value of P_CFG_WEB. This is valid in the case where connection to a server which is a connection destination cannot be established for any reason (in the case where the server which is a connection destination is not started up).

### (Operation of optical disk apparatus)

The optical disk apparatus according to the present invention has the above described configuration. Operations of the optical disk apparatus having such a configuration will be described below in detail, by using a plurality of flow charts.

### - Operation during startup

An operation when an optical disk apparatus A according to the present invention is started up will be described in detail by using the flow chart of FIG. 5. In the flow chart of FIG. 5, first, when a DVD video player is started up, and a disk is inserted (S10), the player refers to a value of a parameter (P_CFG_WEB) representing whether or not Internet connection is carried out among from the parameters indicating the player configuration information maintained in the player (S11).

In the optical disk apparatus A according to the present invention, an operating mode for whether or not Internet connection is carried out at a stage of setting an initial operation mode, thereby changing the above described parameters. Further, in Internet connection, a temporary connection mode for temporarily carrying out connection every time connection operation is made and a full connection mode for carrying out connection when power is turned on, thereby continuously establishing the connection state are provided so that the user can select it freely.

At this time, in the case of P_CFG_WEB = 0b, it is discriminated whether or not the inserted disk is a DVD video disk or enhanced DVD video disk (S16). As shown in FIG. 2 and FIG. 3, the DVD video disk contains only DVD video contents of a DVD video area, and the enhanced DVD video disk contains the DVD video contents and the ENAV contents in another recording areas

In the case where the discrimination result is the DVD video disk, as is the case with the existing DVD video player, management information contained in the DVD video disk is read, and reproduction is started in accordance with a first play PGC contained in the management information (S17).

In the case where the discrimination result is the enhanced DVD video disk, reference is made to a value of a parameter (P_CFG_ENAV) representing whether DVD video disk reproduction is carried out or enhanced DVD video disk reproduction is carried out among from the parameters indicating the player configuration information maintained in the DVD video player (S18).

At this time, when P_CFG_ENAV = 0b, namely, in the case where DVD video disk reproduction is carried out (S17), as described previously, management information contained in the DVD video disk is read, and reproduction is started in accordance with a first play PGC contained in the management information.

When P_CFG_ENAV = 1b namely, in the case where enhanced DVD video disk reproduction is carried out (S19), such reproduction is carried out in accordance with a startup file (for example, an "index. htm" file or an "index. sml" file existing immediately beneath a DVD_ENAV directory) which is predetermined in the enhanced DVD video disk.

On the other hand, in the step S11, in the same manner as when P_CFG_WEB = 1b, first, it is discriminated whether an inserted disk is a DVD video disk or an enhanced DVD video' disk (S12). In the case where the discrimination result is the existing DVD video disk, no ENAV contents exist in the disk. Thus, the ENAV contents (web contents) downloaded from a specific web server via the Internet is reproduced (S15). The web content reproduction processing in step S15 will be described later by using the flow chart of FIG. 8.

On the other hand, in the case where the discrimination result is the enhanced DVD video disk, reference is made to a value of a parameter (P_CFG_ENAV) representing whether DVD video disk reproduction is carried out or enhanced DVD video disk reproduction is carried out from among the parameters indicating the player configuration information maintained in the DVD video player (S13). At this time, when P_CFG_ENAV = 0b, namely, in the case where DVD video disk reproduction is carried out, as described previously, the ENAV contents (web contents) downloaded from a specific web content distribution server via the Internet are reproduced without reproducing the ENAV contents in the disk (S15).

In the step S13, when P_CFG_ENAV = 1b, namely, in the case where enhanced DVD video disk reproduction is carried out, such reproduction is carried out in accordance with a startup file (for example, an "index. htm" file or an "index. sml" file existing immediately beneath a DVD_ENAV directory) which is predetermined in the enhanced DVD video disk. Namely, first, the startup file in the disk is read, and in accordance with the reading, the ENAV contents in the disk or the ENAV contents (hereinafter, referred to as web contents for clarity) downloaded from a specific web server via the Internet are reproduced (S14).

### - Operation for reproducing ENAV contents including web contents

Now, an operation for reproducing ENAV contents including web contents in step S14 of FIG. 5 will be described by using the flow chart of FIG. 6.

As described previously, first, a startup file (for example, an "index. htm" file or an "index. sml" file existing immediately beneath a root DVD_ENAV directory) existing on a disk is read (S22), and in accordance with the reading, reproduction is carried out. This startup file is described in a markup language such as HTML/XHTML or SMIL and a script language such as ECMA script or Java script. This file refers to the ENAV contents on a disk or a web content distribution server S.

If a request for reproducing web contents is not provided to the startup file (S23), reproduction of the ENAV contents on the disk is carried out (S24). However, if a request for reproducing web contents is made (S23) and the ENAV contents on the web content distribution server S are referred to by address information or authentication information contained in the startup file which is a markup/script language 31 which is enhanced navigation contents, for example, in the disk, an access is provided to the web content distribution server S to be referred to by working of a user event control portion 54 and an Internet communication portion 62. Then, an authentication work for downloading web contents is carried out based on authentication information stored in a startup file or the like similarly or decoded data of contents. described later (S25).

This authentication processing can be carried out without waiting for user operation at a time when a disk is first inserted, in the flow chart of FIG. 5. Therefore, the user can download the ENAV contents from the web content distribution server S via the Internet automatically by instructing reproduction of disk contents. 'In addition, as described later with reference to FIGS. 9A to 9D, the user can obtain a video image obtained when the DVD contents in the dist and the ENAV contents of the web are composed with each other.

In the case where authentication is successful, the optical disk apparatus compares the ENAV contents on the disk with the ENAV contents on the web server. For example, by using a time stamp of each file or version number or the like which each file has, a comparison is made to confirm which file is of the more recent type.

If the web contents are not of the more recent type as compared with the ENAV contents on the disk (S26), the ENAV contents on the disk are reproduced (S27) without carrying out downloading on the disk. Otherwise, the work of downloading the web contents referred to is carried out (S28). When downloading completes (S29), reproduction of the downloaded web contents is carried out (S30).

In the authentication work of the step S25, if authentication is not successful, reproduction of the ENAV contents recorded on the disk is carried out instead (S31, S33). At this time, in the case where the ENAV contents reproduced instead are not present on the disk, an error message or the like is displayed, notifying to the user that the ENAV contents cannot be reproduced (S32).

In the downloading work, in the case where downloading has failed in any reason (in the-case where connection is canceled), reproduction of the ENAV contents recorded on the disk instead is carried out (S33). In the case where the ENAV contents to be reproduced instead are not present on the disk, an error message or the like is displayed, notifying to the user that the ENAV contents cannot be reproduced (S32).

FIG. 7 shows an example of configuration of the ENAV contents including web contents. The ENAV contents are composed of a markup language such as HTML/XHTML or SMIL, data for controlling reproduction of the ENAV contents described in the ECMA script or Java script, image data such as motion picture or still picture, and voice data or the like. In order to control reproduction of the ENAV contents, reference can be made to data on the DVD video contents themselves other than data configuring the ENAV contents described previously.

For example, in FIG. 7, a file for startup is recorded in the disk. In this file, reference is made to a value of an internal parameter P_CFG_WEB of the player described previously; when P_CFG_WEB = 0b, Internet connection (web connection) is not carried out, and data for controlling reproduction recorded on the disk is read; when P_CFG_WEB = 1b, Internet connection (web connection) is carried out, and data for controlling reproduction on the web content distribution server S is read by downloading it. These operations are described in a script language or the like.

In this manner, a player in which P_CFG_WEB = 0b has been set (the existing DVD player, enhanced DVD compatible player which does not have an Internet connection function, or enhanced DVD compatible player has an Internet connection function, but does not activate an Internet connection function) reads data for controlling reproduction recorded on the disk. All of the ENAV contents referred to by this data are recorded, in a disk, and all of them can be reproduced.

On the other hand, 'a player in which P_CFG_WEB = 1b (enhanced DVD compatible player has an Internet connection function and activates an Internet connection function) reads data for controlling reproduction on the web content distribution server S' by downloading it. The ENAV contents referred to by this data refers to the ENAV contents on the web content distribution server S or the ENAV contents on the disk. By placing the ENAV contents on a web, the player having the Internet connection function can always read the latest data. At this time, for data which is not changed, the data on the disk is read in accordance with data for controlling reproduction.

### - Operation for reproducing web contents

Now, an operation for reproducing web contents in the step S15 of FIG. 5 will be described here. This operation assumes a DVD video disk in which ENAV contents are not present on a disk or an enhanced DVD video disk in which ENAV contents are present, but the ENAV contents on the disk are not used.

In the flow chart of FIG. 8, first, in an optical disk apparatus A, an access is provided to a web content distribution server S in which there exist contents corresponding to the inserted DVD disk. At this time, a method for specifying the web content distribution server S includes the following cases:
(1) The user manually uses a device setting menu or the like which the optical disk apparatus has, thereby inputting information (such as URL address or IP address) contained in the web content distribution server S to be accessed (S41).
(2) The optical disk apparatus refers to web server information which is present at a specific portion in the disk (as an example, video management information VMG21 contained in a DVD video area 13 of a DVD video disk and URL address or IP address and the like stored in a startup file or the like in a markup/script language 31 which is the ENAV contents in another recording area 14 of the DVD video disk) (S42).
(3) The optical disk apparatus first provides access to a specific database server B, as shown in FIG. 11. Then, the disk device uses DVD disk information (for example, DVD video disk management information VMG21 or part of video title set 22 which is object information), thereby specifying addresses of the web servers (web content distribution servers) S1 to S3 corresponding to the disk (S43).

The optical disk apparatus A provides access to the thus specified web content distribution server S (S44), and carries out authentication work for downloading the accessed web content distribution server S and web contents. Then, in the case where authentication is successful (S45), the work of downloading the ENAV contents from this server S is started (S46). When downloading completes (S47), reproduction of the ENAV contents can be carried out (S48).

If authentication has failed, or alternatively, if the downloading work has failed (if connection has been canceled), an error message is notified to the user, indicating that the ENAV contents cannot be reproduced (S49).

### - Reproduction and composition of ENAV contents

The downloaded ENAV contents can be displayed independently or can be displayed to be composed with the DVD contents in the disk or the ENAV contents in the disk. FIGS. 9A to 9D are illustrative views illustrating examples of displaying the contents of the optical disk by the optical disk apparatus according to the present invention and the ENAV contents from a web.

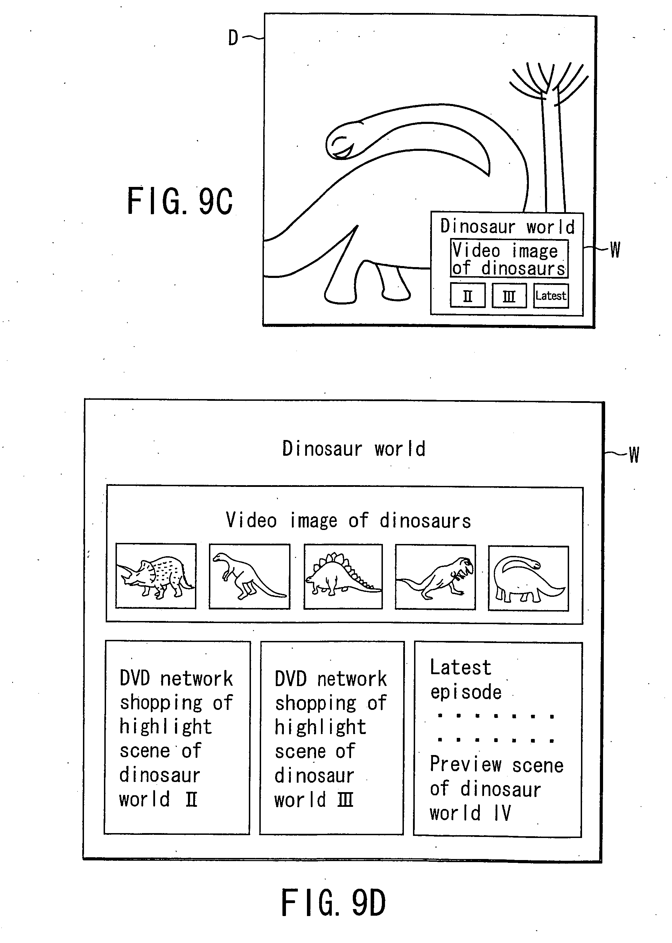

FIG. 9A shows a screen on which optical disk video contents or ENAV contents is displayed. FIG. 9B shows a screen on which the optical disk video contents or ENAV contents D are displayed in a small window while the ENAV contents for web distribution are provided as background. FIG. 9C shows a screen on which the ENAV contents for web distribution are displayed in a small window. FIG. 9D shows a screen on which the ENAV contents W for web distribution is displayed. That is, in the case where downloading completes in the step S46 of FIG. 8, and reproduction of the ENAV contents is carried out in the step S48, it is possible to display at least the four cases described above.

That is, the ENAV contents distributed from the web content distribution server S via an Internet communication portion 62 are decoded by means of an ENAV interpreting portion 56, and the corresponding ENAV command is supplied to an ENAV interface portion 55 and is supplied from a buffer portion 57 to an element decoder 58. Then, video image and/or voice data is supplied to a video image and/or voice output control portion 59.

On the other hand, a user event control portion 54 receives an operating signal from a user operating portion 53 or operates an output mode selecting switch 102 of the above described remote controller 101, thereby supplying a control signal to the video image and/or voice output control portion 59 in order to carrying out switching of the previously described four cases (a), (b), (c), and (d). The video image and/or voice output control portion 59 properly composes voice data with the video image and/or voice data from the element decoder 58, and generates a composite video image of (b) and (c). Then, this control portion selectively outputs desired video image data and voice data according to a control signal from the user event control portion 54.

In addition, it is possible to output either one of the ENAV contents in the disk and the web distributed ENAV contents according to an operating signal without using the DVD contents in the disk.

In this manner, in the optical disk apparatus A according to the present invention, in addition to the DVD contents stored in an optical disk "d" or the ENAV contents, the ENAV contents distributed from the web content distribution server S can be independently or can be displayed to be composed with the DVD contents in the disk or the ENAV contents. At this time, as described later, processing for providing access to the web content distribution server S is carried out based on address information stored in the optical disk, and authentication processing is carried out based on the information stored in the optical disk. Thus, distribution of the ENAV contents cannot be achieved if no optical disk is provided.

In this manner, according to the present invention, there is provided an optical disk apparatus, an optical disk processing method, and an optical disk capable of utilizing enhanced navigation contents with highly added value supplied from the web content distribution server S via a communication line, together with information contained in the disk, while ensuring high security.

### - Personal authentication and purchase procedures

Further, according to the present invention, when web contents are reproduced in the step S48 in accordance with the flow chart of FIG. 8, an IC card 108 having stored therein information for personal authentication is inserted via an IC card interface 63 shown in FIG. 1 or via an interface provided at a remote controller 101 shown in FIG. 15, whereby this personal information can be read. In this manner, personal authentication processing can be very easily - carried out for the web content distribution server S. For example, purchase procedures can be easily carried out for shopping information contained in a DVD associated with a DVD which is currently in reproduction shown as one of the ENAV contents shown in FIG. 9D.

Therefore, the user mounts an optical disk on a disk detecting portion 61 of the optical disk apparatus A according to the present invention in order to reproduce the optical disk, whereby connection to the Internet is automatically made based on address information or the like contained in the disk, authentication processing is automatically carried out, and then, the ENAV contents distributed from the web content distribution -server S are downloaded. Thus, for example, -as shown in FIG. 9C, the user can see a composite image of the contents associated with a video image in reproduction. Then, based on information for personal authentication from the above described 1C. card 108, an access can be provided to a screen for procedures for purchasing the associated disk, as shown in FIG. 9D, for example, making it possible to carry out the purchase procedures.

### - ENAV contents

FIG. 10 shows an example of configuration of ENAV contents (web contents) acquired from the web content distribution server S. The ENAV contents are composed of: data for controlling reproduction of the ENAV contents described in a markup language such as HTML/XHTML or SMIL or a script language such as ECMA script or Java script; image data such as motion picture or still picture; and voice data or the like. For the data for controlling reproduction of the ENAV contents, reference can be made to data on DVD video contents themselves other than data for configuring the ENAV contents described previously. This example assumes a DVD video disk or an enhanced DVD video disk which only refers to a DVD video area. Thus, with respect to data for controlling reproduction, reference is made only to the ENAV contents acquired from the web content distribution server S or the DVD video contents recorded on the disk.

### - Authentication processing

Procedures for carrying out processing for authentication between an optical disk apparatus A with an Internet connection function and a web content distribution server S for distributing ENAV contents will be described by using the flow chart indicating authentication processing of FIG. 12. This authentication processing is shown in the step S25 of FIG. 6 and the step S45 or the like of FIG. 8.

In this flow chart, first, the optical disk apparatus A issues a distribution request to the web content distribution server S for distributing the specified ENAV contents (S51). The web content distribution server S having received the distribution request (S52) makes a request for issuing check data (authentication information) for carrying out authentication in order to carry out authentication procedures to check whether the optical disk apparatus A having requested distribution is requested from a regular DVD video disk or an enhanced DVD video disk (S52).

As an example of check data (authentication information), a part of data contained in the DVD video disk and/or enhanced DVD video disk can be used.

For example, a part of the control data contained in a lead-in area 11 or a part of the data on video management information VMG21 can be used. Further, in much of the DVD video contents, data is encoded. As check data, a part of the data on the DVD video content is used after the data on the DVD video content has been decoded, thereby making it possible to certify authentication information from a regular DVD player and a regular DVD video disk and/or enhanced DVD video disk. Therefore, in the optical disk apparatus, data obtained after decoding the encoded information contained in the DVD disk (which may be a video title set 22 of DVD video contents or may be motion picture data 32 of ENAV contents or the like) is transmitted as check data (authentication information) to the web content distribution server (S53).

After the web content distribution server S has parsed check data for authentication transmitted from the optical disk apparatus A, when the data is recognized to be valid, the server makes a request for check data for specifying a title of the DVD video disk and/or enhanced DVD video disk (S54). As an example, this check data is transmitted using a part of the control data contained in the lead-in area 11, a part of the data on video management information VMG21, or a part of the data on the DVD video contents after decoded, as described previously (S55). In addition, this check data can be compatible with check data for authentication described previously.

The web content distribution server S parses check data for specifying a title transmitted from the optical disk apparatus A, and then, uses a database or the like which the web content distribution server S has, to specify the title of the DVD video disk and/or enhanced DVD video disk inserted into the optical disk apparatus A. Then, the web content server S distributes to the optical disk apparatus A the ENAV contents corresponding to the title of the DVD video disk and/or enhanced DVD video disk (S56). Then, the optical disk apparatus A stores the received ENAV contents in the internal buffer portion (S57). At this time, as ENAV contents to be distributed, the encoded ENAV contents may be distributed or the decoded ENAV contents may be distributed. However, in the case where the encoded ENAV contents are distributed, it is required to decode them in the optical disk apparatus A. For example, the ENAV contents on a buffer are decoded by using key information recorded in the disk (S57). Then, the decoded ENAV contents are reproduced and outputted to be composed with the DVD video contents, or alternatively, are outputted and reproduced independently.

Here, the encoded contents in the disk have been used as authentication information, i.e., check data by decoding them. In addition, it is possible to provide authentication information used exclusively for the DVD contents in the disk or the ENAV contents. As long as authentication processing is carried out using the information stored in the disk, security can be ensured similarly.

### - Encode and/or decode processing

Encode and/or decode processing in the step S57 of FIG. 12 will be described with reference to FIG. 13. The ENAV contents placed in the web content distribution server S are encoded (as key information) in advance by using data contained in the corresponding DVD video disk and/or enhanced DVD video disk. As the key information described previously, it is possible to use a part of the control data contained in the lead-in area 11, for example, a portion at which encoding of data on video management information VMG21 is not carried out, or a portion at which encoding of a video title set VTS22 is not carried out. In this manner, even if an optical disk apparatus A has received ENAV contents, the ENAV contents cannot be decoded unless a normal DVD video disk and/or enhanced DVD video disk has been inserted. Therefore, reproduction cannot be carried out.

The optical disk apparatus A having received the encoded ENAV contents described previously stores ENAV contents in a buffer portion 57, and then, carries out decoding work. As long as the DVD video disk and/or enhanced DVD video disk corresponding to the received ENAV contents are/is inserted into the optical disk apparatus A, the optical disk apparatus A always has key information contained in the DVD video disk and/or enhanced DVD video disk used for encoding. The optical disk apparatus A decodes the encoded ENAV contents stored in the buffer portion 47 by using the key information, and stores them in the buffer portion 57 again. In this manner, while security is maintained, the ENAV contents can be distributed from the content distribution server S to the optical disk apparatus A.

### - Full authentication processing

Now, a description will be given with respect to a case of automatically carrying out the above described authentication processing in a repetitive manner in a predetermined cycle, thereby canceling distribution of recording contents when and after the optical disk has been removed. That is, the steps S51 of requesting distribution, S52 of requesting check data, S53 of transmi-tting decoded data, and S54 of completing authentication processing in FIG. 12 are carried out in a repetitive manner in a predetermined cycle, thereby making it possible to monitor that the optical disk is always stored. As a result, authentication processing can be carried out at a plurality of times. With such processing, the result of authentication processing if the optical disk is removed is set to be invalid, thereby making it impossible to subsequently acquire recording contents including ENAV contents. As a result, higher security can be ensured.

According to the method shown in the flow chart of FIG. 14, further, after authentication processing has completed, when it is checked that the disk has been ejected by user operation or the like (S61), the authentication state is assumed to have been canceled. by determination of the user event control portion 54 or the like. Then, a state of connection to the web content distribution server S is canceled (S62). Then, it becomes possible to carry out reproduction of the DVD video contents (S63), to carry out reproduction of the ENAV contents which do not include web contents (S64), or alternatively, to continuously carry out only web connection which does not require authentication processing.

With the method shown in FIG. 14 as well, as in the method for repeating authentication processing in a predetermined cycle, it becomes possible to ensure security of the ENAV contents to be distributed.

As has been described above in detail, according to the optical disk apparatus and optical disk according to the present invention, in addition to information stored in a disk, a variety of information such as ENAV contents distributed from the web content distribution server S via a communication line together with the information contained in the disk can be reproduced to be composed with DVD contents, or alternatively, can be reproduced independently. In addition, access processing and authentication processing are carried out based on the information stored in the disk, and thus, a person who does not have the disk cannot acquire distributed information. Therefore, high security is assured, thus making it possible to distribute ENAV contents or the like which are highly value added, extensible information.

According to a variety of embodiments described above, one skilled in the art can achieve the present invention. Further, various modifications of these embodiments can be conceived by those skilled in the art, and can be applied to a variety of embodiments even without having inventive ability. Therefore, the present invention covers a broad scope as long as there is no contradiction between the disclosed principle and novel features, and is not limited to the above described embodiments.

As has been described above in detail, according to the present invention, there can be provided an optical disk apparatus, an optical disk processing method, and an optical disk capable of utilizing extensible information via a communication line with security, together with information contained in a disk.

## Claims

1. An optical disk apparatus which reproduces at least one of a video image and a voice information from an optical disk, the optical disk apparatus
**characterized by** comprising:
a control portion (54, 62) for, based on address information and authentication information read out from the optical disk, providing access to a specific server via a communication line to carry out authentication processing, thereby acquiring extensible information from the specific server; and
a reproducing portion (E) for reproducing and outputting the extensible information acquired by the control portion.

2. An optical disk apparatus according to claim 1, **characterized in that** the reproducing portion generates composite information for reproducing at least one of a video image and a voice information reproduced from the optical disk and extensible information acquired by the control portion at the same time.

3. An optical disk apparatus according to claim 2, **characterized in that** the reproducing portion selectively outputs one of the video image and the voice information, the extensible information, and the composite information according to an operating signal.

4. An optical disk' apparatus according to claim 1, **characterized in that**, when extensible' information read out from the optical disk is identical to the extensible information acquired by the control portion, the reproducing portion compares both of these extensible information with each other, and
**characterized in that**, when it is determined that the extensible information acquired by the control portion. is of the more recent type as compared with the extensible information read out from the optical disk, the reproducing portion outputs the extensible information acquired by the control portion instead of the extensible information read out from the optical disk.

5. An optical disk apparatus according to claim 1, **characterized in that** the reproducing portion invalidates an authentication processing result of the control portion when the optical disk has been removed, and disables acquisition of the extensible information from the specific server of the control portion when or after the optical disk has been removed.

6. An optical disk apparatus according to claim 1, **characterized in that** the reproducing portion decodes the extensible information acquired by the control portion by using key information read out from the optical disk.

7. An optical disk apparatus according to claim 1, **characterized in that** the control portion provides an access to a specific server via a communication line to carry out authentication processing based on address information and authentication information read out from the optical disk, and then, carries out personal authentication with the specific server based on user's personal information.

8. An optical disk apparatus according to claim 7, **characterized in that** the control portion carries out processing for procedures for purchasing an article based on the extensible information after the personal authentication.

9. An optical disk apparatus according to claim 7, **characterized in that** the control portion reads out the personal information from a recording medium having the personal information to carry out the personal authentication.

10. An optical disk processing method
**characterized by** comprising:
reading out address information and authentication information from an optical disk (S22);
based on the address information and the authentication information which have been read out, providing access to a specific server via a communication line to carry out authentication processing (S25);
based on a result of the authentication processing, acquiring extensible information from the specific server (S26); and
reproducing and outputting the acquired extensible information (S30, S33).

11. An optical disk processing method according to claim 10, **characterized in that** the reproduction processing generates composite information for reproducing one of the video image and the voice information, reproduced from the optical disk and the extensible information acquired by the control portion at the same time.

12. An optical disk processing method according to claim 11, **characterized in that** the reproduction processing selectively outputs one of the video image and the voice information, and the extensible information and the composite information according to an operating signal.

13. An optical disk processing method according to - claim 10, **characterized in that**, when the extensible information read out from the optical disk is identical to the extensible information acquired by the control portion, the reproduction processing compares both of these extensible information with each other, and wherein, when it is determined that the extensible information acquired by the control portion is of the more recent type as compared with the extensible information read out from the optical disk, the reproduction processing outputs the extensible information acquired by the control portion instead of the extensible information read out from the optical disk.

14. An optical disk processing method according to claim 10, **characterized in that**, when the optical disk has been removed, the reproduction processing invalidates an authentication processing result of the control portion, and disables acquisition of the extensible information from the specific server of the control portion when or after the optical disk has been removed.

15. An optical disk processing method according to claim 10, **characterized in that**, the reproduction processing decodes extensible information acquired by the control portion by using key information read out from the optical disk.

16. An optical disk processing method according to claim 10, **characterized in that** the authentication processing provides access to a specific server via a communication line based on address information and authentication information read out from the optical disk, and then, carries out personal authentication based on user's personal information with the specific server.

17. An optical disk processing method according to claim 16, **characterized in that** processing for procedures for purchasing an article is further carried out based on the extensible information after the personal authentication.

18. An optical disk processing method according to claim 16, **characterized in that** the authentication processing reads out the personal information from a recording medium having stored therein the personal information, thereby carrying out the personal authentication.

19. An optical disk, **characterized in that** video contents (21, 22, 23) are stored in a first region (13), and address information (31) and authentication information (31) for acquiring extensible information are stored in a second region (14) via a communication line.
